# EUROPEAN PATENT SPECIFICATION

(11) **EP 3 466 731 B1**
(45) Date of publication and mention of the grant of the patent: **12.02.2020**
(21) Application number: 17734377.9
(22) Date of filing: 31.05.2017
(51) Int. Cl.: B60F 3/00

(54) **COOLANT SYSTEM FOR LANDING CRAFT**
KÜHLSYSTEM FÜR AMPHIBIENFAHRZEUG
SYSTÈME DE REFROIDISSEMENT POUR BARGE DE DÉBARQUEMENT

(30) Priority: 03.06.2016 ES 201630750
(43) Date of publication of application: 10.04.2019
(73) Proprietor: Navantia S.A., 28006 Madrid (ES)
(72) Inventor: FERNÁNDEZ GONZÁLEZ, José Luis, 28006 Madrid (ES); MARTÍNEZ GONZÁLEZ, Arturo, 28006 Madrid (ES)
(74) Representative: Elzaburu S.L.P.
(86) International application number: PCT/ES2017/070382
(87) International publication number: WO 2017/207854

(56) References cited:
- EP-A2- 0 970 824
- WO-A2-2005/115774
- US-A1- 2006 005 755
- US-B1- 6 808 430

## Description

### Field of the invention

The present invention relates to a cooling system for landing craft, particularly for a craft of the type used in amphibious operations on beaches for landing troops and materials.

### Background of the invention

The applicant has developed and manufactured various amphibious landing craft mechanized (LCM), whose main mission is to land troops and landing materials from the amphibious assault ships on the beach. An example of these landing craft are LCM-1E craft, which improved the characteristics of traditional LCM-8 craft, inter alia, in terms of speed, low-speed manoeuvrability, ro-ro deck space and ease of operation.

LCM-1E craft are high-performance landing craft, aimed mainly at offering high speed, high manoeuvrability, high load capacity and high vehicle transfer capacity. Said craft broke with the philosophy of landing operations existing until then, due to which a new craft design scenario had to be addressed. Therefore, the high power required for the new craft to fulfil the operating requirements had to be compatible with amphibious operations (beach operations).

An essential element to take into account in landing craft and in amphibious vehicles is the cooling system used for the engines.

ES 2289280 T3 ("Cooling systems for amphibious vehicle") discloses a cooling system comprising cooling liquid conduits for circulating the coolant around the engine, an air inlet, a first heat exchanger connected to the conduits and disposed such as to allow the passage of air through the air inlet by means of the first exchanger to cool the coolant circulating around the engine, a water inlet on the lower part of the hull and a second heat exchanger connected to the conduits and disposed such as to allow the passage of external water through the water inlet from the exterior of the hull towards the interior thereof and from there through the second exchanger to cool the coolant, wherein the water inlet is disposed within the two rear thirds of the length of the hull. Therefore, this document discloses a double cooling system for an amphibious vehicle, with a water inlet and an air inlet.

US4767367A discloses a craft having a series of elements that ensure the intake of cooling water even in those cases where the craft is navigating at great speed. To this end, structural elements are disposed around the propeller shafts and two different water inlets are included. These water inlets are controlled by means of valves and ensure a continuous supply of cooling water, since each valve acts in accordance with the direction in which the craft is moving.

US4579090A discloses a typical cooling system of amphibious vehicles, particularly those which move mainly on land. The cooling system consists of an air-cooled radiator. When the vehicle moves in water, the fan associated with the cooling system is disconnected, whereupon it is cooled by water from a tank and a filter-water inlet.

KR20130109797A discloses a seawater-based cooling system used in a craft. The system incorporates a pressure gauge and a temperature gauge to maintain the pressure of the cooled seawater and measure its temperature. The objective is to maintain the cooling parameters of the load constant, thereby optimising the cooling system.

US6808430B1 discloses a low-capacity amphibious vehicle that moves preferably on land. It is cooled by means of a radiator mounted on the front part thereof, with a cooling inlet and a cooling outlet. There is a passage wherethrough cooling water circulates as the cold focus of the system.

US5690046A discloses an example of a low-capacity amphibious vehicle having an ambient air-based cooling system when the vehicle moves on land and a water-based external cooling system when the vehicle moves in water.

JPH04321412A discloses a cooling system for an amphibious vehicle whose engine cooling system is based on a seawater exchanger.

The high propulsion power installed in the craft requires a high cooling flow rate, which is lower when amphibious operations are carried out on the beach due to the shallow depth of the water and to the amount of sand in suspension.

Therefore, there is a need to find a solution to the problem of lack of cooling when the landing craft run aground on beaches.

### Summary of the invention

Therefore, the object of the present invention is to provide a cooling system for landing craft that resolves the aforementioned drawbacks, supplying a sufficient amount of water to the cooling system to allow the continuous cooling of the engines.

The present invention provides a cooling system for landing craft that cools the at least one propulsion engine of the landing craft and that comprises a series of cooling liquid circulation conduits and at least one pump and, additionally:
- at least one stern cooling liquid inlet disposed on the stern of the landing craft,
- at least one bow cooling liquid inlet disposed on each side of the landing craft, and
- at least one valve which allows the passage of cooling liquid from at least one stern inlet, from at least one bow inlet or from at least one stern inlet and at least one bow inlet simultaneously.

The cooling system of the invention enables the proper cooling of the engines in landing operations, even with a heavy swell.

Additionally, the cooling system of the invention makes it possible to control the inlets to be left open with the object of being able to carry out the desired operations with the landing craft in each situation, thereby guaranteeing proper cooling.

### Brief description of the drawings

Following is a non-limiting illustration of the object of the present invention, making reference to the accompanying drawings, wherein:
Figure 1 shows a partial diagram of the cooling system of the landing craft of the invention.
Figure 2 shows a cross-sectional view of the landing craft of the invention.
Figure 3 shows an enlarged detail of figure 2 with a bow seawater inlet.
Figure 4 shows an exploded view of a bow seawater inlet.
Figure 5 shows a stern seawater inlet.

### Detailed description of the invention

For the purpose of achieving greater operability in landing operations, the seawater inlets of the cooling service of the main engines 4 have been disposed on the bows 3, 3' rather than on the hull. This new configuration minimises the effect of the entrance of sand/silt in suspension on the beach in the interior of the circuit when the craft manoeuvres in landing operations.

In order increase operability when navigating at high speed, suction means 11 have been installed in the aforementioned inlets for the purpose of favouring suctioning. Additionally, adequate grilles have been disposed to minimise the suctioning of sand or silt during beach operations.

Additionally and in order to ensure greater safety, additional inlets have been incorporated to the stern 2, the area with the greatest draft, to operate with them alternately in landings with rough sea. This location has proven to be optimal in the successive tests conducted, given the small proportion of suspended sand and silt in the proximity thereof.

In landing operations, phenomena such as stones suctioned through the waterjet conduits occur which occasionally render the propellers inoperable.

In order to minimise these phenomena, grilles have been installed in the waterjet conduits, which prevent stones from accessing the propellers but that reduce craft speed to a certain extent. This reduction in speed is due to the lower performance of the propellers caused by the alteration of the flow in the interior of the conduit caused by the aforementioned grille.

The stern seawater inlets have difficulties in the following operations:
- Landing in a heavy swell, since the troughs of the waves expose the seawater inlets, and
- High-speed navigation, since the water flow creates a "spoon" on the stern that empties the stern, thereby exposing the seawater inlets.

These situations would leave the engines 4 without cooling, causing them to stop immediately.

The impossibility of finding an effective mean for all the operations made it necessary to seek individual solutions and operate them from the bridge in accordance with the operational need.

The solutions were:
a) High-speed navigation - bow seawater inlet with suction "shell" to prevent the high speed from causing loss of prime of the cooling system.
b) Amphibious beach operations - stern seawater inlet with wave compensation tank.
c) Systems integration - panel on the bridge that makes it possible to change the cooling system in accordance with external and operating conditions.

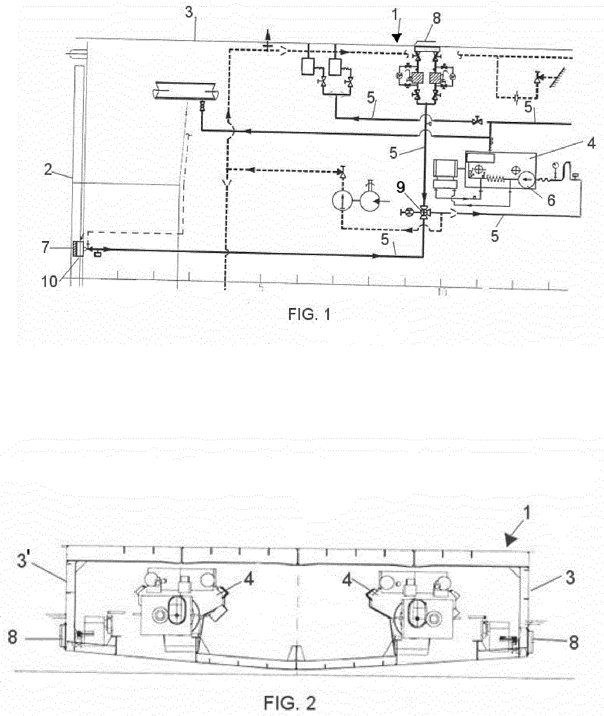

Figure 1 shows a partial schematic view of a landing craft 1 and the cooling system of the invention. The figure partially represents a bow 3 and the stern 2 of the landing craft 1. Said figure 1 shows a propulsion engine 4 that is cooled by the cooling system of the invention. A series of conduits 5 containing the cooling liquid that circulates through the interior thereof is cooled by the cooling system of the invention. A series of conduits 5 contain the cooling liquid that circulates through the interior thereof and which is impelled by a pump 6.

A stern cooling liquid inlet 7 can be observed, which comprises a cooling liquid accumulator tank 10, also called stern compensation tank.

A bow cooling liquid inlet 8 and a valve 9 which allows the passage of the cooling liquid from the stern inlet 7, from the bow inlet 8 or from the stern inlet 7 and the bow inlet 8 simultaneously can also be observed.

The continuation along the lower part of figure 1 could be basically symmetrical to said figure, with a symmetrically disposed bow inlet 8 and a stern inlet 7.

Figure 2 shows a cross-sectional view of the landing craft 1, wherein the bows 3, 3', bow inlets 8 and the propulsion engines 4 in the interior thereof can be observed.

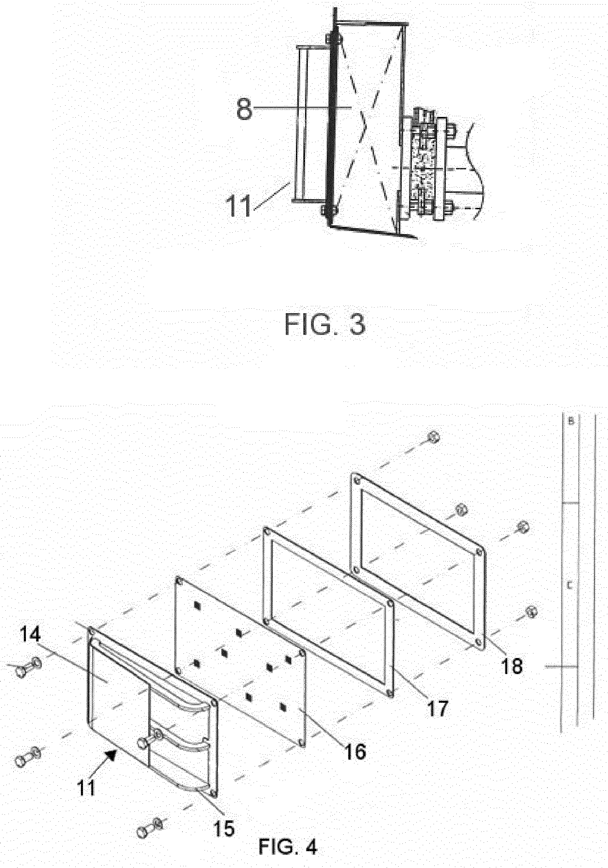

Figure 3 shows a bow inlet 8 of figure 2 in an enlarged detail view. It can be observed that it comprises means for suctioning 11 the cooling liquid which, in said embodiment, may adopt the form of a suction shell, represented in greater detail in figure 4. These suction shells 11 for high speed in the bow inlets 8 are illustrated in figure 4 and comprise a front closing lid 14 and a bottom closing lid 15. The assembly may also comprise a perforated metal sheet 16 and a washer made of synthetic material 17 and a support frame 18 for fixing to the corresponding bow.

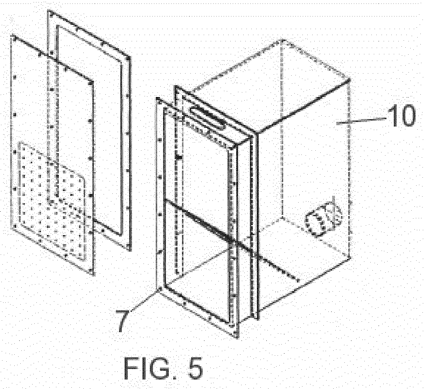

The stern 2 compensation tanks 10 of figure 5 are designed so that the potential energy of the waves fills them with sufficient capacity to provide the necessary cooling to the engines 4 until the next wave train.

The valve 9 may be a valve remotely controlled from the bridge that enables exchange between:
a) Stern cooling
b) Bow cooling
c) Combined cooling

All in accordance with the external conditions of the operation.

Although embodiments of the invention have been described and represented, it is evident that modifications comprised within its scope may be introduced therein; however, the invention should not be considered to be limited to said embodiments, but rather only to the content of the following claims.

## Claims

1. A cooling system for landing craft (1), which cools the at least one propulsion engine (4) of the landing craft and that comprises a series of cooling liquid circulation conduits (5) and at least one pump (6), **characterised in that** it additionally comprises:
- at least one stern cooling liquid inlet (7), disposed on the stern (2) of the landing craft (1),
- at least one bow cooling liquid inlet (8) disposed on each side (3, 3') of the landing craft (1), and
- at least one valve (9) which allows the passage of the cooling liquid from at least one stern inlet (7), from at least one bow inlet (8) or from at least one stern inlet (7) and at least one bow inlet (8) simultaneously.

2. The cooling system for landing craft (1), according to claim 1, wherein the at least one stern inlet (7) comprises a cooling liquid accumulator tank (10).

3. The cooling system for landing craft (1), according to any of the preceding claims, wherein each bow inlet (8) comprises cooling liquid suction means (11).

4. The cooling system for landing craft (1), according to any of the preceding claims, wherein each bow inlet (8) comprises a grille.

5. The cooling system for landing craft (1), according to any of the preceding claims, wherein the cooling liquid circulation conduits (5) include grilles.

6. The cooling system for landing craft (1), according to any of the preceding claims, wherein the valve (9) is a remotely controlled valve.

7. The cooling system for landing craft (1), according to any of the preceding claims, wherein the cooling liquid is seawater.

8. Landing craft (1), which comprises a cooling system of any of claims 1 to 7.

## Patentansprüche

1. Kühlsystem für Landungsfahrzeuge (1), das den mindestens einen Antriebsmotor (4) des Landungsfahrzeugs kühlt und das eine Reihe von Kühlflüssigkeits-Zirkulationsleitungen (5) und mindestens eine Pumpe (6) umfasst, **dadurch gekennzeichnet, dass** es außerdem umfasst:
- mindestens einen Heck-Kühlflüssigkeitseinlass (7), der am Heck (2) des Landungsfahrzeugs (1) angeordnet ist,
- mindestens einen Bug-Kühlflüssigkeitseinlass (8), der auf jeder Seite (3, 3') des Landungsfahrzeugs (1) angeordnet ist, und
- mindestens ein Ventil (9), das den Durchfluss der Kühlflüssigkeit von mindestens einem Heck-Einlass (7), von mindestens einem Bug-Einlass (8) oder von mindestens einem Heck-Einlass (7) und mindestens einem Bug-Einlass (8) gleichzeitig ermöglicht.

2. Kühlsystem für Landungsfahrzeuge (1) nach Anspruch 1, wobei der mindestens eine Heck-Einlass (7) einen Kühlflüssigkeits-Sammelbehälter (10) umfasst.

3. Kühlsystem für Landungsfahrzeuge (1) nach einem der vorhergehenden Ansprüche, wobei jeder Bug-Einlass (8) eine Kühlflüssigkeits-Saugvorrichtung (11) umfasst.

4. Kühlsystem für Landungsfahrzeuge (1) nach einem der vorhergehenden Ansprüche, wobei jeder Bug-Einlass (8) ein Gitter umfasst.

5. Kühlsystem für Landungsfahrzeuge (1) nach einem der vorhergehenden Ansprüche, wobei die Kühlflüssigkeits-Zirkulationsleitungen (5) Gitter einschließen.

6. Kühlsystem für Landungsfahrzeuge (1) nach einem der vorhergehenden Ansprüche, wobei das Ventil (9) ein ferngesteuertes Ventil ist.

7. Kühlsystem für Landungsfahrzeuge (1) nach einem der vorhergehenden Ansprüche, wobei die Kühlflüssigkeit Meerwasser ist.

8. Landungsfahrzeug (1), das ein Kühlsystem nach einem der Ansprüche 1 bis 7 umfasst.

## Revendications

1. Un système de refroidissement pour une péniche débarquement (1), qui refroidit au moins un moteur de propulsion (4) de la péniche de débarquement et qui comprend une série de conduites de circulation de liquide de refroidissement (5) et au moins une pompe (6), **caractérisée en ce qu'**elle comprend en plus :
- au moins une entrée de liquide de refroidissement arrière (7), disposée à l'arrière (2) de la péniche de débarquement (1),
- au moins une entrée de liquide de refroidissement avant (8), disposée de chaque côté (3, 3') de la péniche de débarquement (1), et
- au moins une vanne (9) qui permet le passage du liquide de refroidissement depuis au moins une entrée arrière (7), depuis au moins une entrée avant (8), ou depuis au moins une entrée arrière (7) et au moins une entrée avant (8) simultanément.

2. Le système de refroidissement pour une péniche de débarquement (1), selon la revendication 1, dans lequel au moins une entrée arrière (7) comprend un réservoir d'accumulation de liquide de refroidissement (10).

3. Le système de refroidissement pour une péniche de débarquement (1), selon l'une des revendications précédentes, dans lequel chaque entrée avant (8) comprend des moyens d'aspiration du liquide de refroidissement (11).

4. Le système de refroidissement pour une péniche de débarquement (1), selon l'une des revendications précédentes, dans lequel chaque entrée avant (8) comprend une crépine.

5. Le système de refroidissement pour une péniche de débarquement (1), selon l'une des revendications précédentes, dans lequel les conduites de circulation du liquide de refroidissement (5) comprennent des crépines.

6. Le système de refroidissement pour une péniche de débarquement (1), selon l'une des revendications précédentes, dans lequel la vanne (9) est une vanne commandée à distance.

7. Le système de refroidissement pour une péniche de débarquement (1), selon l'une des revendications précédentes, dans lequel le liquide de refroidissement est de l'eau de mer.

8. Une péniche de débarquement (1), qui comprend un système de refroidissement selon l'une des revendications 1 à 7.
